# EUROPÄISCHE PATENTSCHRIFT

(11) **EP 1 980 926 B1**
(45) Veröffentlichungstag und Bekanntmachung des Hinweises auf die Patenterteilung: **14.10.2009**
(21) Anmeldenummer: 07007395.2
(22) Anmeldetag: 11.04.2007
(51) Int. Cl.: G05D 23/20, G05D 23/24

(54) **Verfahren zur Erzeugung eines gedämpften Istwerts aus einem Istwert einer in einem Regelkreis geregelten Grösse sowie Anwendung des Verfahrens in einem Regelkreis mit einem Zweipunktregler**
Method for attenuating an actual value, the actual value being regulated in a control loop, and application of the method in a control loop with a two-level controller
Procédé destiné à l'amortissement d'une valeur mesurée et regulée dans une boucle de réglage, et utilisation du procédé dans une boucle de commande à deux états

(43) Veröffentlichungstag der Anmeldung: 15.10.2008
(73) Patentinhaber: Petersam, Daniel, 97990 Wekersheim-Lautenbach (DE)
(72) Erfinder: Petersam, Daniel, 97990 Wekersheim-Lautenbach (DE)
(74) Vertreter: Schubert, Siegmar

(56) Entgegenhaltungen:
- EP-A1- 0 376 548
- US-A- 4 553 078
- US-A- 4 848 099
- US-A- 5 801 939

## Beschreibung

Die Erfindung betrifft ein Verfahren zur Erzeugung eines gedämpften Istwerts aus einem Istwert einer in einem Regelkreis geregelten Größe, wobei der Istwert insbesondere eine Schwingung aufweist, gemäß dem Oberbegriff des Anspruchs 1.

Ein weiterer Aspekt der Erfindung betrifft die Anwendung eines solchen Verfahrens in einem Regelkreis mit einem mit Schalthysterese behafteten Zweipunktregler gemäß Anspruch 14.

Bei technischen Regelvorgängen kann das Problem auftreten, den zeitlichen Verlauf des Istwerts einer geregelten Größe für bestimmte Zwecke zu dämpfen, ohne den Regelkreis selbst zu beeinflussen, der ohne die für die bestimmten Zwecke wünschenswerte Dämpfung optimiert sein kann. Die Dämpfung kann insbesondere dann wünschenswert sein, wenn mit einer Anzeigeeinrichtung eine Größe anzuzeigen ist, die aus einer starken zyklischen Schwankungen unterworfenen geregelten Größe abgeleitet wird.

Dieses Problem tritt insbesondere bei der Regelung eines Flüssigkeitsbades wie eines Wasserbades mit einem Schalthysterese aufweisenden Zweipunktregler ein, dessen Istwerteingang mit einem an dem Boden des Flüssigkeitsbads angeordneten Temperatursensor verbunden ist und dessen Ausgang eine ebenfalls an dem Boden des Flüssigkeitsbads angeordnete Heizmatte speist, d.h. ein- und ausschaltet, wobei also der Temperatursensor und die Heizmatte mit dem Boden in wärmeleitender Verbindung stehen und mit diesem eine Regelstrecke bilden. Aufgrund der Trägheit der Regelstrecke und einer Schalthysterese des Zweipunktreglers ist die geregelte Bodentemperatur beträchtlichen zyklischen Schwankungen unterworfen. Zur Beurteilung der Konstanz der Regelung interessiert aber der Temperaturverlauf der Flüssigkeit in dem Flüssigkeitsbad, die deutlich weniger schwankt. Wenn zu einer Messung und/oder Registrierung der Temperatur der Flüssigkeit in dem Flüssigkeitsbad keine gesonderte, Aufwand verursachende Sensoranordnung verwendet werden darf, zum Beispiel ein Eintauchfühler, der unter Umständen die Zugänglichkeit des Flüssigkeitsbads behindern kann, soll daher aus dem zur Regelung der Bodentemperatur erfassten Istwert ein Wert zur Anzeige gebildet werden, welcher der Temperatur der Flüssigkeit, insbesondere an einer zentralen Stelle in dem Flüssigkeitsbad, besser entspricht als die zyklisch stark schwankende Bodentemperatur.

Dazu kann daran gedacht werden, den Istwert der geregelten Größe, insbesondere in dem obigen Anwendungsfall die Bodentemperatur des Flüssigkeitsbads zur Anzeige mit einem Tiefpassfilter zu dämpfen, d.h. einen gedämpften Istwert zu erzeugen. Ein solcher Tiefpassfilter bedeutet jedoch einen erhöhten Aufwand, insbesondere wenn Istwertschwankungen großer Periodendauer gedämpft werden sollen, und es verursacht eine Verzögerung und/oder Totzeit bei der Bildung des gedämpften Istwerts, die unerwünscht ist. Letzteres gilt insbesondere, wenn Störgrößeneinflüsse auf die geregelte Größe rasch erkannt werden sollen.

Nach einem aus der US 4 553 078 A bekannten Verfahren kann in einem geregelten Servosystem abhängig von einer Nachführabweichung (command-to-response error) jeweils ein konventioneller Nachführregelkreis mit einem ersten Regler oder ein spezieller Nachführregelkreis mit einem zweiten Regler eingeschaltet werden, während der jeweils andere Nachführregelkreis abgeschaltet ist. Der erste Regler und der zweite Regler unterscheiden sich in ihrem Übertragungsverhalten bzw. Verstärkungsfaktor, der bei dem zweiten Regler größer ist. Der spezielle Nachführregelkreis soll nur ausnahmsweise dann eingeschaltet werden, wenn die Nachführabweichung einen vorgegebenen Wert überschreitet. Damit soll die Nachführgenauigkeit verbessert werden und die Nachführgeschwindigkeit soll erhöht werden. Es ist nicht ersichtlich, dass und wie dieses Verfahren zur Lösung der nachfolgenden Aufgabe dienen kann.

Der vorliegenden Erfindung liegt die Aufgabe zugrunde, ein besseres Verfahren zur Erzeugung eines gedämpften Istwerts aus dem Istwert einer in einem Regelkreis geregelten Größe der eingangs genannten Gattung vorzuschlagen, bei dem der gedämpfte Istwert gegenüber dem ihm zugrundeliegenden Istwert möglichst nicht verzögert ist, ohne zur Realisierung des Verfahrens einen großen Aufwand zu erfordern.

Diese Aufgabe wird durch das in Anspruch 1 angegebene Verfahren gelöst.

Nach diesem Verfahren kann der gedämpfte Istwert praktisch in Echtzeit gebildet werden, d.h. errechnet werden.

Aus der in dem kennzeichnenden Teil des Anspruchs 1 dargestellten Abhängigkeit des Korrekturwerts von der Regeldifferenz, wonach der Korrekturwert bei einer Regeldifferenz von Null ebenfalls Null ist, und der Betrag des Korrekturwerts in einem ersten sich an Null anschließenden Bereich der Regeldifferenz bis zu einem ersten Maximalwert ansteigt, resultiert bei einer kleinen Regeldifferenz ein kleiner Korrekturwert, der den Istwert nur geringfügig korrigiert. Etwas größere Regeldifferenzen führen hingegen zu größeren Korrekturwerten bis zu einem ersten Maximalwert und insoweit zu stärkeren Korrekturen des Istwerts. Der Maximalwert des Korrekturwerts kann empirisch bzw. rechnergestützt ermittelt und vorgegeben werden. Damit kann z.B. bereits eine besonders gewünschte Dämpfung des ersten Überschwingens des Istwerts der geregelten Größe erreicht werden, das bei einer Regelung der Größe mit einem Zweipunktregler z.B. bei Einschalten des Reglers oder bei einem Sollwertsprung auftritt.

Insbesondere zur Herabsetzung des ersten Überschwingens des Istwerts in dem gedämpften Istwert ist nach Anspruch 3 vorzugsweise in dem ersten Bereich der Regeldifferenz, in dem diese negativ ist, der Korrekturwert negativ, der einen negativen Maximalwert annehmen kann.

Gemäß Anspruch 2 kann das Verfahren zur Erzeugung des gedämpften Istwerts dadurch erweitert werden, dass der Korrekturwert auch in einem zweiten sich an Null anschließenden Bereich der Regeldifferenz erzeugt wird, wobei der Betrag des Korrekturwerts bis zu einem zweiten Maximalwert ansteigt. Vorzugsweise ist nach Anspruch 4 die Regeldifferenz in dem zweiten Bereich positiv. Der jeweils zugehörige Korrekturwert und somit dessen Maximum sind ebenfalls vorzugsweise positiv. Damit kann in Verbindung mit der Dämpfung nach den Ansprüchen 1 und 3 eine Dauerschwingung durch Erzeugen des korrigierten Istwerts wirksam reduziert werden.

Weiterhin kann vorteilhaft nach Anspruch 5 der Betrag des Korrekturwerts in einem sich an den ersten Maximalwert anschließenden dritten Bereich der Regeldifferenz und in einem sich an den zweiten Maximalwert anschließenden vierten Bereich der Regeldifferenz bis Null abfallen. Dabei sind die Vorzeichen der Regeldifferenz und des Korrekturwerts in dem dritten Bereich die gleichen wie in dem ersten Bereich sowie in dem vierten Bereich die gleichen wie in dem zweiten Bereich. Die Reduzierung des Betrags des Korrekturwertes in Abhängigkeit von der Regeldifferenz verläuft in dem dritten Bereich und in dem vierten Bereich mit geringerer Änderungsrate als der Anstieg des Betrags in dem ersten Bereich und in dem zweiten Bereich. Daraus ergibt sich auch, dass der dritte Bereich größer ist als der erste Bereich und der vierte Bereich größer ist als der zweite Bereich der Regeldifferenz. Die Dimensionierung des dritten Bereichs und des vierten Bereichs bzw. die Abhängigkeit des Korrekturwerts in diesen beiden Bereichen von der Regeldifferenz bewirkt vorteilhaft, dass verhältnismäßig große Istwertänderungen aufgrund von Störgrößen mit dem korrigierten Istwert deutlich angezeigt werden können, weil deren Korrektur schwächer ist als die Korrektur in dem Bereich der Dauerschwingung.

Soweit es bei der Erzeugung des korrigierten Istwerts vor allem auf die Herabsetzung des ersten Überschwingens ankommt, kann der korrigierte Istwert zweckmäßig einfach nur in dem ersten Bereich und in dem anschließenden dritten Bereich der Regeldifferenz, und zwar für deren negative Werte, erzeugt werden, so dass die Implementierung nur dieser beiden Bereiche genügt.

Besonders einfach kann die Abhängigkeit des Korrekturwerts von der Regeldifferenz in dem ersten Bereich der Regeldifferenz und in dem zweiten Bereich der Regeldifferenz jeweils durch eine Geradengleichung für jede der beiden Bereiche implementiert werden, gemäß den Ansprüchen 6 und 7.

Insbesondere für den Fall, dass der Istwert der geregelten Größe nicht symmetrisch um den Sollwert schwingt, können für positive Regeldifferenzen und negative Regeldifferenzen unterschiedliche Geradengleichungen gemäß Anspruch 8 vorgegeben werden.

Statt der Geradengleichungen können in dem ersten Bereich und in dem zweiten Bereich in der Nähe des Sollwertes auch Parabelgleichungen zur Bildung des Korrekturwerts aus der Regeldifferenz vorgegeben werden, gemäß den Ansprüchen 9 und 10. Mit den Parabelgleichungen bzw. Parabelfunktionen können kleine Istwertschwankungen in der Nähe des Sollwertes relativ stark gedämpft werden. Hierzu sind allerdings ein höherer Programmieraufwand und ein höherer Programmspeicherbedarf zu erfüllen.

In dem Fall, in dem der Betrag des Korrekturwerts in einem sich an den ersten positiven Maximalwert anschließenden dritten Bereich positiver Regeldifferenzen und in einem sich an den zweiten negativen Maximalwert anschließenden vierten Bereich negativer Regeldifferenzen bis Null abfällt, kann wiederum gemäß Anspruch 11 der Korrekturwert in dem dritten Bereich und in dem vierten Bereich jeweils nach einer einfachen Geradengleichung von der Regeldifferenz abhängen, womit der weiter oben genannte Vorteil der wenig aufwendigen Implementierung genutzt werden kann.

Für noch größere Beträge der Regeldifferenz über deren dritten und vierten Bereich hinaus kann der Korrekturwert besonders einfach nach Anspruch 12 auf Null gesetzt werden, um einen aussagekräftigen Verlauf des gedämpften, insbesondere anzuzeigenden Istwerts zu erhalten.

Die Verfahrensschritte zur Bildung des gedämpften Istwerts sind in Anspruch 13 angegeben.

Das erfindungsgemäße Dämpfungsverfahren wird bevorzugt in Regelkreisen eingesetzt, in denen der zur Regelung erfasste Istwert der geregelten Größe auch zu anderen Zwecken, insbesondere zur Anzeige nach Anspruch 15 genutzt werden soll, aber stark schwingt. Letzteres dynamisches Verhalten ist typisch für einen Regelkreis mit einer Schalthysterese aufweisenden Zweipunktregler gemäß Anspruch 14, der immer eine Dauerschwingung des Istwerts der Regelgröße hervorruft. Ähnlich kann das Dämpfungsverfahren des geregelten Istwerts auch für einen Regelkreis mit einem Dreipunktregler verwendet werden, wenn dieser eine Dauerschwingung der geregelten Größe verursacht, oder unter diesen Bedingungen auch mit einem anderen unstetigen Regler.

Eine besonders bevorzugte Verwendung des Verfahrens zur Dämpfung des Istwerts ist gemäß Anspruch 14 im Zusammenwirken mit der Regelung eines Flüssigkeitsbads mit einem Zweipunktregler vorgesehen, der typisch eine Schalthysterese aufweist. An dem Badboden sind mit diesem wärmeleitend in Verbindung stehend eine Heizmatte sowie zur Erfassung der Bodentemperatur ein Temperatursensor angeordnet. Der Temperatursensor ist mit einem Istwerteingang des Zweipunktreglers verbunden, dessen Ausgang über ein Schaltglied mit der Heizmatte in Verbindung steht, um diese beim Erreichen eines vorgegebenen Sollwerts auszuschalten, aber einzuschalten, wenn die erfasste Bodentemperatur um einen vorgegebenen Betrag, die Schalthysterese, unter den Sollwert absinkt. Wegen dieser Arbeitsweise des Zweipunktreglers und der trägen Regelstrecke, die durch den Badboden unter der Flüssigkeit des Flüssigkeitsbads gebildet ist, entstehen erhebliche Temperaturschwankungen der Bodentemperatur. In Verbindung mit dieser unkomplizierten Regleranordnung soll gleichwohl ohne gesonderten Sensor, z. B. Eintauchfühler, die Badtemperatur, d.h. die Temperatur der Flüssigkeit in dem Flüssigkeitsbad, die wegen Ausgleichsvorgängen in dem Flüssigkeitsbad weniger stark schwankt, wenigstens näherungsweise mit einer Anzeigeeinrichtung, insbesondere einem Display, angezeigt werden. Um hierzu den für die Regelung erfassten Istwert der Bodentemperatur zu verwenden, wird dieser nach dem erfindungsgemäßen Verfahren vorteilhaft in Echtzeit mit wenig aufwendigen Mitteln korrigiert, so dass er gedämpft wird. Damit können in guter Annäherung die Badtemperatur und ihre Regelkonstanz dargestellt werden.

Ausführungsbeispiele der Erfindung werden im folgenden anhand einer Zeichnung mit sieben Figuren erläutert, woraus sich weitere vorteilhafte Einzelheiten ergeben können. Es zeigen:
- Figur 1: ein Signalflussbild eines gedämpften Istwertrechners zur Durchführung des erfindungsgemäßen Verfahrens,
- Figur 2: ein Beispiel einer Kennlinie des gedämpften Istwertrechners nach Figur 1,
- Figur 3: ein Beispiel einer weiter entwickelten Kennlinie des gedämpften Istwertrechners nach Figur 1,
- Figur 4: ein Programmablaufdiagramm des gedämpften Istwertrechners zur Realisierung einer Kennlinie gemäß Figur 3,
- Figur 5: ein weiteres Beispiel eines zentralen Kennlinienabschnitts des gedämpften Istwertrechners nach Figur 1,
- Figur 6: eine vereinfachte Darstellung einer Anordnung zur Regelung eines Flüssigkeitsbads mit einem Zweipunktregler und einem gedämpften Istwertrechner nach Figur 1 und
- Figur 7: Zeitdiagramme des Istwerts einer geregelten Bodentemperatur des Flüssigkeitsbads gemäß Figur 6, des gedämpften Istwerts der Bodentemperatur sowie der Badtemperatur in dem Flüssigkeitsbad.

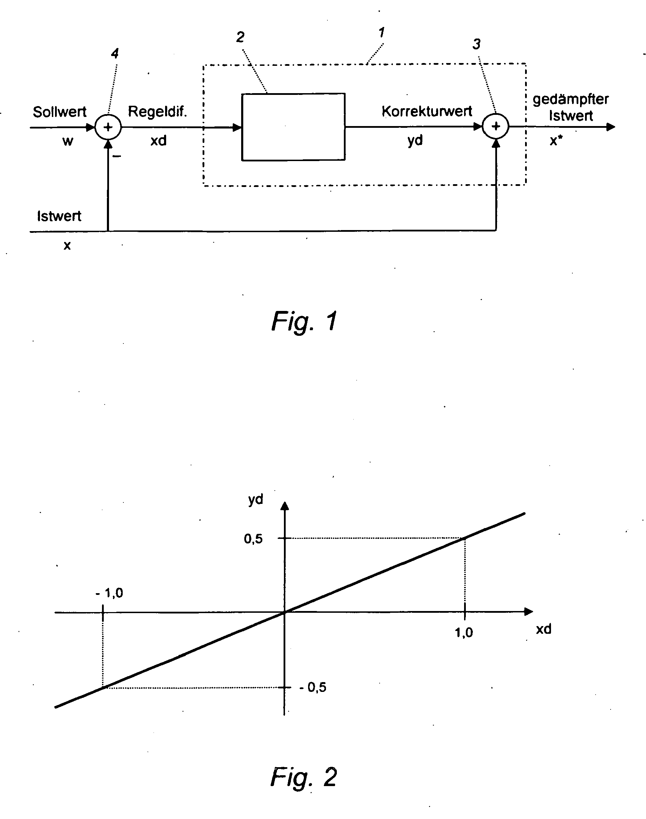

Die in Figur 1 dargestellte Anordnung eines gedämpften Istwertrechners 1 soll den Istwert x einer geregelten Größe, wobei die Regelung insbesondere mit einem Schalthysterese behafteten Zweipunktregler erfolgt, zu einem gedämpften Istwert x* dämpfen. Der hierzu verwendete gedämpfte Istwertrechner 1 umfasst einen Korrekturwertrechner 2, mit dem ein Korrekturwert yd in Abhängigkeit von einer Regeldifferenz xd berechnet wird, um den Korrekturwert yd anschließend in einer Additionsstelle 3 zu dem Istwert x zu addieren und damit zu dämpfen.

Zur Errechnung des Korrekturwerts yd in Abhängigkeit von der Regeldifferenz xd steht der Korrekturwertrechner mit einem Vergleicher 4 in Verbindung, in dem die Regeldifferenz xd durch Vergleich des Istwerts x mit einem vorgegebenen Sollwert w in üblicher Weise gebildet wird. Der Vergleicher kann zweckmäßig Bestandteil eines im übrigen nicht dargestellten Reglers sein.

Die Berechnung des Karrekturwerts yd erfolgt in Abhängigkeit von der Regeldifferenz xd, beispielsweise einfach über eine Geradengleichung gemäß Figur 2, bei der der Korrekturwert yd für die Regelabweichung xd Null ebenfalls Null ist und beidseitig des Nullpunkts für positive und negative Regelabweichungen linear, beispielsweise bis zu einem Korrekturwert yd 0,5 für die Regeldifferenz 1, betragsmäßig ansteigt. Aus einer kleinen Regeldifferenz xd resultiert somit ein kleiner Korrekturwert yd, mit dem der Istwert x nur geringfügig korrigiert wird. Größere Regeldifferenzen bis zu dem Wert 1 führen zu einem größeren Korrekturwert yd und somit zu einer größeren Korrektur des Istwerts x.

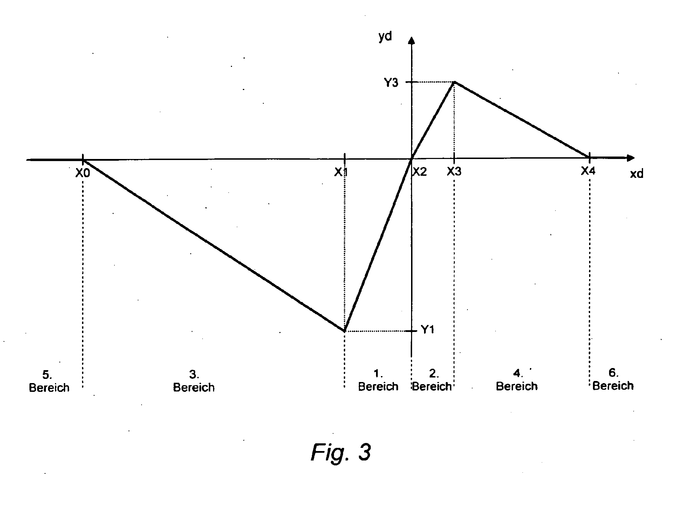

In Figur 3 ist statt der in Figur 2 dargestellten einfachen Gerade als Kennlinie des gedämpften Istwertrechners eine bereichsweise lineare Kennlinie dargestellt, in der jeweils ein erster bis sechster Bereich der Kennlinie linear ist. Im einzelnen beginnen in einem ersten Bereich und in einem zweiten Bereich Kennlinienabschnitte des Korrekturwerts yd wieder bei einer Regeldifferenz X2 von Null und verlaufen linear bis zu einer definierten Regeldifferenz bei X1 bzw. X3, bei der der Betrag des Korrekturwerts yd mit Y1 bzw. Y3 jeweils am größten ist. Darüber hinaus wird der Korrekturwert yd jeweils mit einer anderen Geradengleichung berechnet, so dass mit wachsenden Regeldifferenzen xd in beiden Richtungen der Betrag des Korrekturwerts yd sich linear bis Null reduziert, und zwar mit kleinerer Rate als der Anstieg des Betrags des Korrekturwerts in dem ersten und zweiten Bereich. Somit erstrecken sich der dritte Bereich und der vierte Bereich der Kennlinie über größere Bereiche der Regeldifferenz xd als der benachbarte erste Bereich bzw. zweite Bereich. Wenn die Regeldifferenz Werte bei X4 bzw. bei X0 in positive bzw. negative Richtung überschreitet, bleibt der Korrekturwert yd auf Null gesetzt. Dies bedeutet, dass der Korrekturwert bei Beträgen von Regeldifferenzen, welche einen jeweils vorgegebenen Wert überschreiten, abnimmt und schließlich verschwindet, so dass größere lstwertschwankungen, die beispielsweise durch Störgrößen verursacht sind, realistisch wiedergegeben werden. Die Werte X0 bis X4 sowie Y1, Y3 sind zweckmäßig so gewählt, dass damit ein erstes Überschwingen und eine Dauerschwingung im eingeschwungenen Zustand des Regelkreises wirksam gedämpft werden.

Die in Figur 3 dargestellte Kennlinie ist besonders geeignet für einen Regelkreis, in dem der Istwert x der geregelten Größe nicht symmetrisch um den Sollwert w schwingt, weshalb für positive und negative Regeldifferenzen xd unterschiedliche Geradengleichungen in den ersten bis vierten Bereichen implementiert sind.

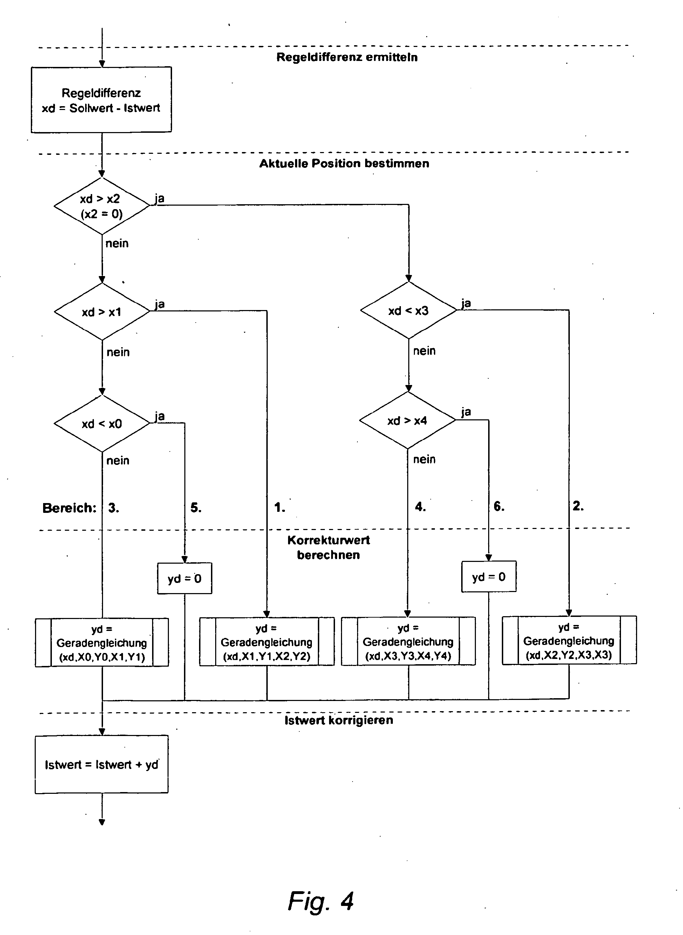

In Figur 4 ist ein Programmablauf in dem gedämpften Istwertrechner 1 in Verbindung mit dem Vergleicher 4 gemäß Figur 1 dargestellt, wobei in dem Korrekturwertrechner 2 eine Kennlinie zur Errechnung des Korrekturwerts yd entsprechend Figur 3 realisiert ist.

Wie in dem Programmablaufdiagramm gemäß Figur 4 dargestellt, wird zunächst in einem ersten Schritt in üblicher Weise die Regeldifferenz xd aus dem Sollwert w minus Istwert x ermittelt. In weiteren Schritten wird überprüft, in welchem des ersten bis sechsten Bereichs sich die Regeldifferenz xd befindet. Je nach dem aufgefundenen Bereich wird dann der Korrekturwert yd entsprechend der für den aufgefundenen Bereich geltenden Abhängigkeit des Korrekturwerts von der Regeldifferenz xd berechnet. Wenn der Betrag der Regeldifferenz sehr groß ist und die Beträge XO bzw. X4 überschreitet und sich somit in dem fünften bzw. sechsten Bereich befindet, wird der Korrekturwert yd konstant auf Null gesetzt. Anschließend wird der geltende Istwert x mit dem für den jeweiligen Bereich berechneten bzw. auf Null gesetzten Korrekturwert yd korrigiert.

In dem in Figur 4 dargestellten Programmablaufdiagramm bzw. Flussdiagramm wird die Berechnung des Korrekturwerts yd mittels jeweils einer für den ersten bis vierten Bereich ausgewählten Geradengleichung in einer separaten Unterfunktion durchgeführt. Dieser Unterfunktion werden bei Aufruf gemäß dem ermittelten Bereich neben der Regeldifferenz xd zwei Punkte, nämlich X- und Y-Koordinate, der Geraden übergeben, mit denen die Gerade definiert ist. Sodann kann die Unterfunktion den Korrekturwert berechnen.

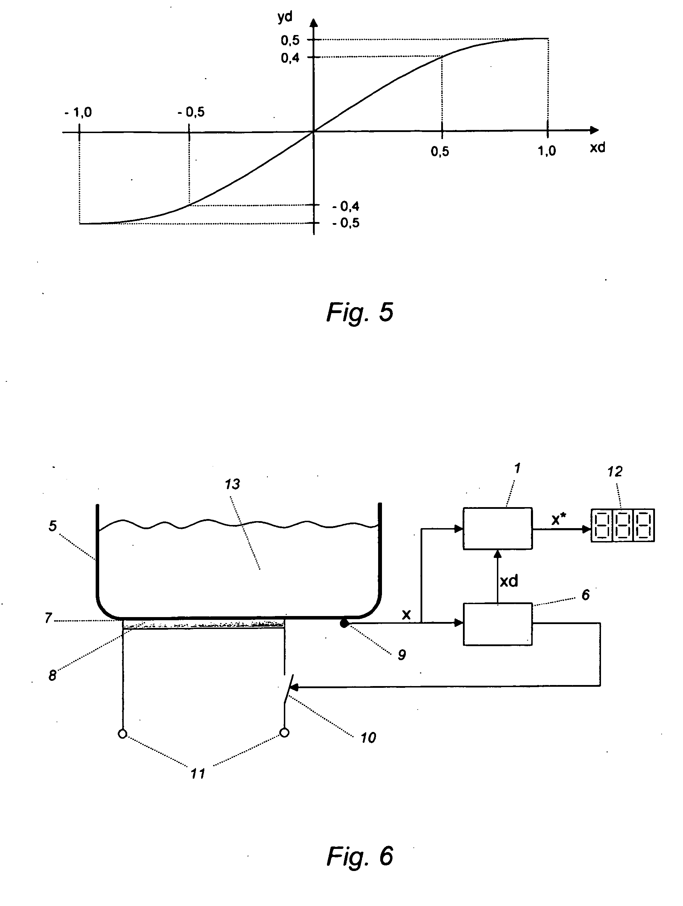

Statt der in der Kennlinie gemäß Figur 3 und für den Programmablauf gemäß Figur 4 in dem ersten Bereich und in dem zweiten Bereich vorgesehenen Geradengleichungen können in der Nähe des Sollwertes, also bei der Regeldifferenz xd nahe Null vorteilhaft Parabeln gemäß Figur 5 zur Berechnung des Korrekturwertes yd verwendet werden. Dadurch werden besonders kleine Abweichungen des Istwerts von dem Sollwert relativ stark korrigiert, was eine stärkere Dämpfung in der Nähe des Sollwertes bedeutet. Damit kann auch ein gleichmäßigerer Übergang zu anschließenden Kennlinienabschnitten des dritten und des vierten Bereichs realisiert werden.

In Figur 6 ist als bevorzugte Verwendung des erfindungsgemäßen Verfahrens zur Dämpfung eines Istwerts mit dem gedämpften Istwertrechner 1 gemäß Figur 1 die Regelung eines Flüssigkeitsbads 5 mit einem Schalthysterese aufweisenden Zweipunktregler 6 schematisch dargestellt.

In anwenderfreundlicher und kostengünstiger Weise ist an einer Unterseite eines Badbodens 7, der bevorzugt aus Edelstahl besteht, eine Heizmatte 8 als Heizkörper angeordnet, die mit dem Badboden 7 in wärmeleitendem Kontakt steht. Ebenfalls unter dem Badboden 7 ist an diesem ein Temperatursensor 9 angebracht, mit dem die Bodentemperatur erfasst wird. Der Temperatursensor 9 steht mit einem nicht bezeichneten Istwerteingang des Zweipunktreglers 6 in Verbindung sowie mit einem Eingang des gedämpften Istwertrechners 1, der außerdem aus dem Zweipunktregler 6 mit einer Regeldifferenz xd beaufschlagt wird. Die Regeldifferenz wird in dem Zweipunktregler 6 aus dem Istwert x der Bodentemperatur und einem Sollwert w gebildet, der durch nicht dargestellte Mittel in dem Zweipunktregler 6 eingestellt ist. Ebenfalls nicht dargestellt sind Mittel zur Einstellung der Schalthysterese des Zweipunktreglers. Von einem nicht bezeichneten Ausgang des Zweipunktreglers wird ein Schaltglied 10 gesteuert, über welches die Heizmatte 8 mit einer Spannungsversorgung 11 verbunden werden kann. An einem Ausgang des gedämpften Istwertrechners 1 ist eine Anzeigeeinrichtung 12 in Form eines Display angeschlossen, um einen gedämpften Istwert x* der Bodentemperatur anzuzeigen.

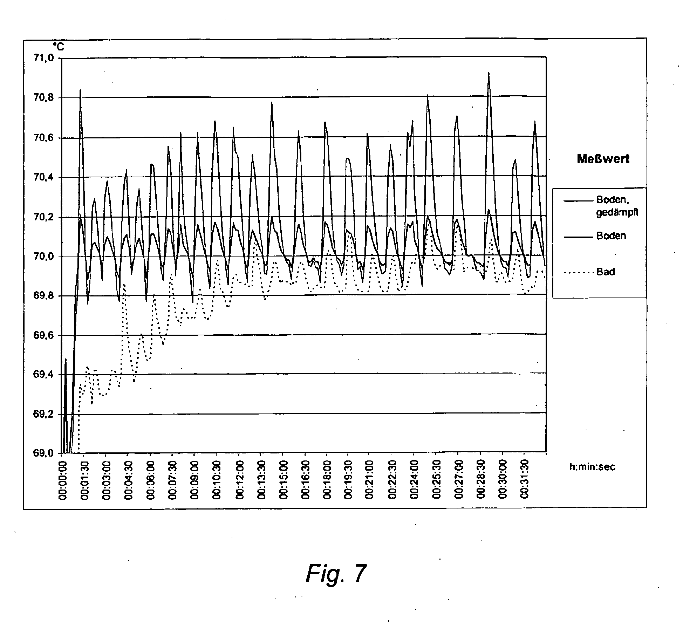

In Figur 7 sind die Zeitdiagramme des Istwerts x, der mit dem Zweipunktregler 6 in der Anordnung gemäß Figur 6 geregelten Bodentemperatur, des gedämpften Istwerts x* der Bodentemperatur, die in dem gedämpften Istwertrechner 1 gebildet wird, sowie der Badtemperatur dargestellt, die in der Flüssigkeit 13, insbesondere Wasser, in dem Flüssigkeitsbad 5 auftritt und die hier eigentlich interessierende Größe darstellt.

Wie Figur 7 zeigt, in der Einschwingvorgänge der dargestellten Temperaturen bei einer Solltemperatur von 70°C und einer Schalthysterese des Zweipunktreglers 6 von 0,1 °C dargestellt sind, unterliegt die mit einer dünnen durchgezogenen Linie dargestellte Bodentemperatur wesentlich größeren Schwankungen um die Solltemperatur als die mit einer unterbrochenen Linie dargestellte Badtemperatur, die in der Badflüssigkeit 13 auftritt und deren Konstanz für die Güte der Regelung maßgebend ist. Die starken Schwankungen der Bodentemperatur sind, außer durch die Schalthysterese des Zweipunktreglers 6, durch die Trägheit der Regelstrecke verursacht.

Wie Figur 7 zeigt, ist die mit einer kräftigen durchgezogenen Linie dargestellte, mit dem gedämpften Istwertrechner 1 korrigierte bzw. gedämpfte Bodentemperatur (Istwert) eine erheblich bessere Annäherung an die interessierende Badtemperatur als die ungedämpfte Bodentemperatur. Aus Figur 7 ist auch ersichtlich, wie gleichwohl die gedämpfte Bodentemperatur praktisch verzögerungsfrei der Bodentemperatur folgt. Somit können beispielsweise Störgrößeneinflüsse auf die Bodentemperatur und die Badtemperatur zeitnah angezeigt werden, wobei größere Störeinflüsse in zunehmendem Maße unverfälscht wiedergegeben werden, da die Kennlinie gemäß Figur 3 in dem gedämpften Istwertrechner 1 implementiert ist.

### Bezugszahlenliste

- 1: gedämpfter Istwertrechner
- 2: Korrekturwertrechner
- 3: Additionsstelle
- 4: Vergleicher
- 5: Flüssigkeitsbad
- 6: Zweipunktregler
- 7: Badboden
- 8: Heizmatte (Heizkörper)
- 9: Temperatursensor
- 10: Schaltglied
- 11: Spannungsversorgung
- 12: Anzeigeeinrichtung (Display)
- 13: Badflüssigkeit

## Patentansprüche

1. Verfahren zur Erzeugung eines gedämpften Istwerts (x*) aus einem Istwert (x) einer in einem Regelkreis geregelten Größe, wobei der Istwert (x) insbesondere eine Schwingung aufweist,
**dadurch gekennzeichnet,**
**dass** zu dem Istwert (x) ein von der Regeldifferenz (xd), die mit ihm gebildet ist, abhängiger Korrekturwert (yd) addiert wird, der bei einer Regeldifferenz (xd) von Null ebenfalls Null ist und dessen Betrag in einem ersten sich an Null anschließenden Bereich der Regeldifferenz (xd) bis zu einem ersten Maximalwert (Y1) ansteigt.

2. Verfahren nach Anspruch 1,
**dadurch gekennzeichnet,**
**dass** der Korrekturwert (yd) auch in einem zweiten sich an Null anschließenden Bereich der Regeldifferenz (xd) generiert wird, wobei der Betrag des Korrekturwerts (yd) bis zu einem zweiten Maximalwert (Y3) ansteigt.

3. Verfahren nach Anspruch 1 oder 2,
**dadurch gekennzeichnet,**
**dass** die Regeldifferenz (xd) in dem ersten Bereich negativ ist und der aus ihr erzeugte Korrekturwert bis zu dem ersten Maximalwert (Y1) des Betrags des Korrekturwerts negativ ist.

4. Verfahren nach Anspruch 2,
**dadurch gekennzeichnet,**
**dass** die Regeldifferenz (xd) in dem zweiten Bereich positiv ist und der aus ihr erzeugte Korrekturwert (yd) bis zu dem zweiten Maximalwert (Y3) des Betrags des Korrekturwerts positiv ist.

5. Verfahren nach Anspruch 2 oder 4,
**dadurch gekennzeichnet,**
**dass** der Betrag des Korrekturwerts (yd) in einem sich an den ersten Maximalwert (Y1) anschließenden dritten Bereich der Regeldifferenz (xd) und in einem sich an den zweiten Maximalwert (Y3) anschließenden vierten Bereich der Regeldifferenz (xd) bis Null abfällt und
**dass** die Vorzeichen der Regeldifferenz (xd) und des Korrekturwerts (yd) in dem dritten Bereich die gleichen sind wie in dem ersten Bereich sowie in dem vierten Bereich die gleichen sind wie in dem zweiten Bereich.

6. Verfahren nach einem der vorangehenden Ansprüche,
**dadurch gekennzeichnet,**
**dass** der Korrekturwert (yd) in dem ersten Bereich der Regeldifferenz (xd) nach einer Geradengleichung von der Regeldifferenz (xd) abhängt.

7. Verfahren nach einem der Ansprüche 2, 4 und 5,
**dadurch gekennzeichnet,**
**dass** der Korrekturwert (yd) in dem zweiten Bereich der Regeldifferenz (xd) nach einer Geradengleichung von der Regeldifferenz (xd) abhängt.

8. Verfahren nach den Ansprüchen 6 und 7,
**dadurch gekennzeichnet,**
**dass** die Geradengleichungen in dem ersten Bereich der Regeldifferenz (xd) und in dem zweiten Bereich der Regeldifferenz (xd) unterschiedlich sind.

9. Verfahren nach einem der Ansprüche 1 bis 5,
**dadurch gekennzeichnet,**
**dass** der Korrekturwert (yd) in dem ersten Bereich der Regeldifferenz (xd) nach einer Parabelgleichung von der Regeldifferenz (xd) abhängt.

10. Verfahren nach einem der Ansprüche 2, 4 und 5,
**dadurch gekennzeichnet,**
**dass** der Korrekturwert (yd) in dem zweiten Bereich der Regeldifferenz (xd) nach einer Parabelgleichung von der Regeldifferenz (xd) abhängt.

11. Verfahren nach Anspruch 5,
**dadurch gekennzeichnet,**
**dass** der Korrekturwert (yd) in dem dritten Bereich und in dem vierten Bereich jeweils nach einer Geradengleichung von der Regeldifferenz (xd) abhängt.

12. Verfahren nach Anspruch 5 oder 11,
**dadurch gekennzeichnet,**
**dass** der Korrekturwert (yd) für größere Beträge der Regeldifferenz (xd) über den dritten Bereich und den vierten Bereich der Regeldifferenzen (xd) hinaus auf Null gesetzt wird.

13. Verfahren nach einem der vorangehenden Ansprüche,
**dadurch gekennzeichnet,**
**dass** nach Bildung der Regeldifferenz (xd) aus Istwert (x) und Sollwert (w) ermittelt wird, in welchem vorgegebenen Bereich von Regeldifferenzen (xd) die Regeldifferenz (xd) auftritt,
**dass** anschließend mit der für diesen Bereich vorgegebenen Gleichung der Korrekturwert (yd) aus der Regelabweichung (xd) gebildet wird und
**dass** sodann der Korrekturwert (yd) zu dem Istwert (x) addiert wird und mit diesem den gedämpften Istwert (x*) darstellt.

14. Verwendung des Verfahrens nach einem der vorangehenden Ansprüche in einem Regelkreis mit einem Schalthysterese aufweisenden Zweipunktregler (6).

15. Verwendung des Verfahrens nach einem der vorangehenden Ansprüche in Verbindung mit einer mit dem gedämpften Istwert (x*) beaufschlagten Anzeigeeinrichtung (12).

16. Verwendung des Verfahrens nach den Ansprüchen 14 und 15 in einem Regelkreis mit einem Flüssigkeitsbad (5), an dessen Badboden (7) eine Heizmatte (8) sowie ein Temperatursensor (9) in wärmeleitender Verbindung mit dem Badboden (7) angeordnet sind,
wobei ein Istwerteingang des Zweipunktreglers (6) mit dem Temperatursensor (9) verbunden ist und ein Ausgang des Zweipunktreglers (6) mit dem Schaltglied (10) zum Schalten der Heizmatte (8) in Verbindung steht und
wobei die zur näherungsweisen Anzeige der Badtemperatur in dem Flüssigkeitsbad (5) vorgesehene Anzeigeeinrichtung (12) mit dem gedämpften Istwert (x*) der Temperatur des Badbodens (7) beaufschlagt wird.

## Claims

1. Method for attenuating an actual value (x) of a quantity regulated in a control loop said actual value (x) having particularly an oscillation, into an attenuated actual value (x*).
**characterized in**
**that** to said actual value (x), a correction value (yd) depending on the control difference (xd) formed on the basis of said actual value (x), is added which correction value in case of a control difference (xd) of zero is also zero and the amount of which in a first range joining zero of said control difference (xd) rises to a first maximum value (Y1).

2. Method according to claim 1,
**characterized in**
**that** said correction value (yd) is also generated in a second range of said control difference (xd) joining zero wherein the amount of said correction value (yd) rises to a second maximum value.

3. Method according to claim 1 or 2,
**characterized in**
**that** said control difference (xd) in said first range is negative and the correction value generated from it is negative up to the first maximum value (Y1) of the amount of the correction value.

4. Method according to claim 2,
**characterized in**
**that** said control difference (xd) in the second range is positive and the correction value (yd) generated from it is positive up to the second maximum value (Y3) of the amount of the correction value.

5. Method according to claim 2 or 4,
**characterized in**
**that** the amount of the correction value (yd) in a third range of said control difference (xd) joining said first maximum value (Y1) and in a fourth range of said control difference (xd) joining said second maximum value (Y3) drops to zero and
**that** the signs of said control difference (xd) and of said correction value (yd) in the third range are the same as in said first range, and in the fourth range are the same as in said second range.

6. Method according to one of the foregoing claims,
**characterized in**
**that** said correction value (yd) in said first range of said control difference (xd) depends, according to a linear equation, on the control difference (xd).

7. Method according to one of claims 2, 4 and 5,
**characterized in**
**that** said correction value (yd) in said second range of said control difference (xd) depends, according to a linear equation, on the control difference (xd).

8. Method according to claims 6 and 7,
**characterized in**
**that** the linear equations in said first range of the control difference (xd) and in said second range of the control difference (xd) are differment.

9. Method according to one of claims 1 to 5,
**characterized in**
**that** the correction value (yd) in said first range of the control difference (xd) depends, according to a parabolic equation, on the control difference (xd).

10. Method according to one of claims 2, 4 and 5,
**characterized in**
**that** the correction value (yd) in said second range of the control difference (xd) depends, according to a parabolic equation, on the control difference (xd).

11. Method according to claim 5,
**characterized in**
**that** the correction value (yd) in said third range and in said fourth range each depend, according to a linear equation, on the control difference (xd).

12. Method according to claim 5 or 11,
**characterized in**
**that** for larger amounts of control difference (xd), the correction value (yd) is set to zero beyond said third range and said fourth range of control differences (xd).

13. Method according to one of the foregoing claims,
**characterized in**
**that** after the generation of control difference (xd) from actual value (x) and nominal value (w), it is determined in which given range of control differences (xd) said control difference (xd) occurs,
**that**, subsequently, based on the equation given for this range, the correction value (yd) is generated from the control difference (xd), and
**that**, subsequently, said correction value (yd) is added to said actual value (x) and together with it constitutes the attenuated actual value (x*).

14. Use of the method according to one of the foregoing claims in a control loop with a two-level controller (6) including a switch hysteresis.

15. Use of the method according to one of the foregoing claims in connection with an indicating device (12) fed with said attenuated actual value (x*).

16. Use of the method according to claims 14 and 15 in a control loop comprising a liquid bath (5) at the bath bottom (7) of which a heating mat (8) and a temperature sensor (9) are disposed in thermo-conductive connection with said bath bottom (7),
wherein an actual value input of said two-level controller (6) is connected with said temperature sensor (9) and an output of said two-level controller (6) is connected with a switching member (10) for controlling said heating mat (8), and
wherein said indicating device (12) provided for approximate indication of the bath temperature in said liquid bath (5) is fed with the attenuated actual value (x*) of the temperature of said bath bottom (7).

## Revendications

1. Procédé destiné à générer une valeur instantanée amortie (x*) à partir d'une valeur instantanée (x) d'une grandeur régulée dans une boucle de régulation, la valeur instantanée (x) présentant, en particulier, une oscillation,
**caractérisé en ce**
**qu'**est ajoutée à la valeur instantanée (x) une valeur de correction (yd) fonction de l'écart de régulation (xd) qui est formé avec celle-ci, laquelle valeur de correction, en présence d'un écart de régulation (xd) de zéro, est également égale à zéro et dont la valeur, dans une première plage de l'écart de régulation (xd) adjacente à zéro, augmente jusqu'à une première valeur maximale (Y1).
eur (26) pour le refroidissement de composants électroniques (24) et en ce qu'essus sont es de niveau supérie

2. Procédé selon la revendication 1,
**caractérisé en ce que**
la valeur de correction (yd) est également générée dans une deuxième plage de l'écart de régulation (xd) adjacente à zéro, la valeur de correction (yd) augmentant jusqu'à une deuxième valeur maximale (Y3).

3. Procédé selon la revendication 1 ou 2,
**caractérisé en ce que**
l'écart de régulation (xd) est négatif dans la première plage et la valeur de correction générée à partir de cet écart est négative jusqu'à la première valeur maximale (Y1) de la valeur de correction.

4. Procédé selon la revendication 2,
**caractérisé en ce que**
l'écart de régulation (xd) est positif dans la deuxième plage et la valeur de correction (yd) générée à partir de cet écart est positive jusqu'à la deuxième valeur maximale (Y3) de la valeur de correction.

5. Procédé selon la revendication 2 ou 4,
**caractérisé en ce que**
la valeur de correction (yd), dans une troisième plage de l'écart de régulation (xd), adjacente à la première valeur maximale (Y1), et dans une quatrième plage de l'écart de régulation (xd), adjacente à la deuxième valeur maximale (Y3), descend jusqu'à zéro et
**en ce que** les signes de l'écart de régulation (xd) et de la valeur de correction (yd) dans la troisième plage sont les mêmes que dans la première plage et, dans la quatrième plage, sont les mêmes que dans la deuxième plage.

6. Procédé selon l'une des revendications précédentes,
**caractérisé en ce que**
la valeur de correction (yd) dans la première plage de l'écart de régulation (xd) est fonction linéaire de l'écart de régulation (xd).

7. Procédé selon l'une des revendications 2, 4 et 5,
**caractérisé en ce que**
la valeur de correction (yd) dans la deuxième plage de l'écart de régulation (xd) est fonction linéaire de l'écart de régulation (xd).

8. Procédé selon les revendications 6 et 7,
**caractérisé en ce que**
les fonctions linéaires dans la première plage de l'écart de régulation (xd) et dans la deuxième plage de l'écart de régulation (xd) sont différentes.

9. Procédé selon l'une des revendications 1 à 5,
**caractérisé en ce que**
la valeur de correction (yd) dans la première plage de l'écart de régulation (xd) est fonction parabolique de l'écart de régulation (xd).

10. Procédé selon l'une des revendications 2, 4 et 5,
**caractérisé en ce que**
la valeur de correction (yd) dans la deuxième plage de l'écart de régulation (xd) est fonction parabolique de l'écart de régulation (xd).

11. Procédé selon la revendication 5,
**caractérisé en ce que**
les valeurs de correction (yd) dans la troisième plage et dans la quatrième plage sont chacune fonction linéaire de l'écart de régulation (xd).

12. Procédé selon la revendication 5 ou 11,
**caractérisé en ce que**
la valeur de correction (yd) pour des valeurs plus élevées de l'écart de régulation (xd) au-delà de la troisième plage et de la quatrième plage des écarts de régulation (xd) est mise à zéro.

13. Procédé selon l'une des revendications précédentes,
**caractérisé en ce que**
après formation de l'écart de régulation (xd) à partir de la valeur instantanée (x) et de la valeur prescrite (w), il est déterminé dans quelle plage prédéterminée d'écarts de régulation (xd) se produit l'écart de régulation,
**en ce qu'**ensuite, au moyen de la fonction prédéterminée pour cette plage, est formée la valeur de correction (yd) à partir de l'écart de régulation (xd), et
**en ce qu'**ensuite la valeur de correction (yd) est ajoutée à la valeur instantanée (x) et représente avec celle-ci la valeur instantanée amortie (x*).

14. Utilisation du procédé selon l'une des revendications précédentes dans une boucle de régulation avec un régulateur à deux positions (6) présentant des hystérésis de commutation.

15. Utilisation du procédé selon l'une des revendications précédentes en liaison avec un dispositif d'affichage (12) dans lequel a été introduite la valeur instantanée amortie (x*).

16. Utilisation du procédé selon les revendications 14 et 15 dans une boucle de régulation comportant un bain de liquide (5) sur le fond (7) duquel sont disposés une natte chauffante (8) ainsi qu'un capteur de température (9) en liaison de conduction de chaleur avec le fond (7) du bain,
une entrée de valeur instantanée du régulateur à deux positions (6) étant reliée au capteur de température et une sortie du régulateur à deux positions (6) étant en liaison avec l'organe de commutation (10) pour activation de la natte chauffante (8) et
le dispositif d'affichage (12), prévu pour l'indication approximative de la température du bain dans le bain de liquide (5), étant alimenté par la valeur instantanée amortie (x*) de la température du fond de bain (7).
